# EUROPEAN PATENT APPLICATION

(11) **EP 4 600 856 A1**
(43) Date of publication of application: **13.08.2025**
(21) Application number: 25153430.1
(22) Date of filing: 22.01.2025
(51) Int. Cl.: G06F 21/57, G06F 11/36

(54) **SECURE CROWDSOURCE-BASED OPEN-SOURCE CODE VERIFICATION METHOD**

(30) Priority: 23.01.2024 IL 31035824
(71) Applicant: Deutsche Telekom AG, 53113 Bonn (DE)
(72) Inventor: NAHUM, Mor, 8544000 Mivtahim (IL); MIMRAN, David, 6215505 Tel Aviv (IL); SHABTAI, Asaf, 7684200 Hulda (IL); ELOVICI, Yuval, 7986400 Arugot (IL); BRODT, Oleg, 8471621 Beer Sheva (IL); LEHMANN, Heiko, 12587 Berlin (DE)
(74) Representative: Graf von Stosch Patentanwaltsgesellschaft mbH

(57) **Abstract**

A method for secure crowdsource-based verification of an OSS code, comprising allowing a user (e.g., a software developer) to generate requests to verify OSS libraries, the requests containing information required for verification; receiving the requests by a plurality of verifiers, and provide, by the verifiers, a response for each request, the response including validation details based on the verifiers' analysis; receiving by the user, all the responses from verifiers; applying a verification policy that meets predetermined criteria, the verification policy consisting of a set of rules and criteria decision-making process and determining an OSS package's expected content.

## Description

### Field of the Invention

The present invention relates to the field of cyber security. More particularly, the invention relates to a system (framework) and method for secure verification of a crowdsource-based open-source code.

### Background for the Invention

The adoption of Open-Source Software (OSS - software that is distributed with its source code, making it available for use, modification, and distribution with its original rights) has made it an appealing target of OSS code's public availability and its extensive use by developers, often leads to the perception that it is trustworthy and bug-free, particularly in well-maintained projects such as Linux and Java [23]. Consequently, developers tend to use these libraries as black boxes, while relying on their functionality without scrutinizing the underlying code. Since software supply chains involve multiple contributors and dependencies, they provide attackers with a wide attack surface where they can exploit vulnerabilities in the software development process and inject malicious code into open-source artifacts [15]. Once these compromised artifacts are downloaded and executed by the victims, the attackers can gain unauthorized access, compromise systems, and potentially steal sensitive data [18].

OSS became a favored target of malicious actors due to several reasons. OSS code is dynamic, i.e., constantly being changed, thus providing many opportunities for attackers to compromise the OSS code; OSS code is maintained by third parties who may adhere to less strict security standards; the number of applications that contain OSS code is rapidly increasing [5, 7].

Attackers can use three main attack vectors (pathways or methods used by a hacker to illegally access a network or computer in an attempt to exploit system vulnerabilities) to execute an OSS supply chain attack:
(1) *Compromise the OSS repository directly* - this is achieved by injecting the malicious code or vulnerability into the OSS repository (open source code is typically stored in a public repository, which anyone may access, contribute to, and share) [15]. If the code is not correctly checked and verified, the attack will not be detected, and the vulnerable OSS code will be integrated within the target systems.
(2) *Network-related attack techniques* - this is achieved by misleading the developer (i.e., the development or build environment) into downloading a malicious open-source library from a malicious repository controlled by the attacker, e.g., by using typo squatting (a form of cybersquatting that targets Internet users who incorrectly type a website address into their web browser. When users make such a typographical error, they may be led to an alternative website owned by a hacker that is usually designed for malicious purposes), DNS poisoning (Domain Name System poisoning happens when fake information is entered into the cache of a domain name server, resulting in DNS queries producing an incorrect reply, sending users to the wrong website), or dependency confusion [5, 18].
(3) *Compromise the local OSS repository -* this is achieved by an attacker that can change the OSS library in the local environment (i.e., development build or pre-deployment environments) and add malicious/vulnerable artifacts.

OSS supply chain attacks can be categorized as *targeted* (i.e., aimed at attacking a specific developer/organization) or *untargeted* (i.e., an attempt to harm as many developers/users as possible by manipulating them to that they install a popular OSS library that has been compromised by the attacker [15]). While targeted attacks are the most pernicious issue in this domain, they have received little attention (see Table 1). Since most of the previous studies focused on specific platforms (e.g., different package managers, specific types of attacks) they cannot generalize across targeted attacks. In addition, they may not address targeted attacks in a deterministic and collaborative manner.

Attacks may target a specific developer/organization, but there are several types of targeted attacks that attack a specific process in the victim system but spread to all developers/users (e.g., malware that infects Java projects during the compilation process by embedding itself in the binary code and is spread to other Java projects (specifically for NetBeans) on the same computer [3]). While such attacks aim to compromise the build process, malicious code that is inserted into the source code with the intent of compromising the production stage is of particular interest. These attacks are more likely to be detected, since they spread to all developers/users equally, whereas the attacks in focus may be considered more sophisticated and therefore, more difficult to prevent.

Software supply chain attacks range from attacks on hardware-based supply chains to attacks on build processes (an aspect of software development, of transforming source code into a fully functional application, library, or software product ready for deployment), third-party executables, and libraries. OSS supply chain attacks refer to attackers' malicious attempts to compromise OSS libraries and tamper with the software supply chain (the components, libraries, tools, and processes used to develop, build, and publish a software artifact) [18]. These attacks can be divided into two categories: (1) Targeted attacks: attacks in which the attacker targets a specific organization or developer; these attacks rely on the attacker's strong technical skills and long-term commitment. Since these attacks are tailored to the target, they are difficult to prevent, allowing the attacker to remain undetected for an extended period of time. Several targeted attacks embedded conditional malicious code in a package distributed to all users but designed to only be activated under conditions unique to the targeted entity [3]. However, since these packages are distributed to a wide audience, they might be easily detected or prevented. In contrast, targeted OSS attacks which are crafted towards a specific targeted developer or organization and do not appear in the general OSS repositories, can be undetected for a long period of time. The focus is on above mentioned targeted attacks that intend to compromise the production stage rather than the build process as previously done [3]. (2) Untargeted attacks: attacks that are not aimed at a specific developer or organization; in this case, the goal is to harm as many users as possible by manipulating them into installing an OSS library that has been compromised by the attacker [5].

In both categories, attackers compromise the software supply chain to spread malware or malicious code, steal sensitive data, disrupt the software's normal functioning, or implant a vulnerability that can be exploited in the future [1, 2].

Previous studies (see Table 1) presented various methods aimed at improving software supply chain's robustness to cyberattacks. The methods proposed in those studies can be categorized as follows:
(1) *Threat models:* These techniques analyze potential attack vectors, identify threat models to comprehend the current threat landscape, assess vulnerabilities in software supply chains, and contributes to the enhancement of software supply chain security. However, the proposed techniques fall short in the mitigation of targeted OSS supply chain attacks, since they are generally designed to identify vulnerabilities in a broad threat landscape, thereby making them less effective against attacks that are specifically made to exploit the unique characteristics of the target.
(2) *Security enhancement techniques:* These techniques (such as frameworks, systems, and mechanisms, such as permission systems, sandboxing strategies, and transparency logs) are capable of mitigating risks, preventing the distribution of malicious packages, and enhancing security. These approaches contribute to enhanced package manager security and software development practices and provide robust defenses against a broad spectrum of threats. However, they may not be fully effective against targeted OSS supply chain attacks, since targeted attacks are crafted to exploit specific vulnerabilities of a particular target or bypass specific security measures they have in place.

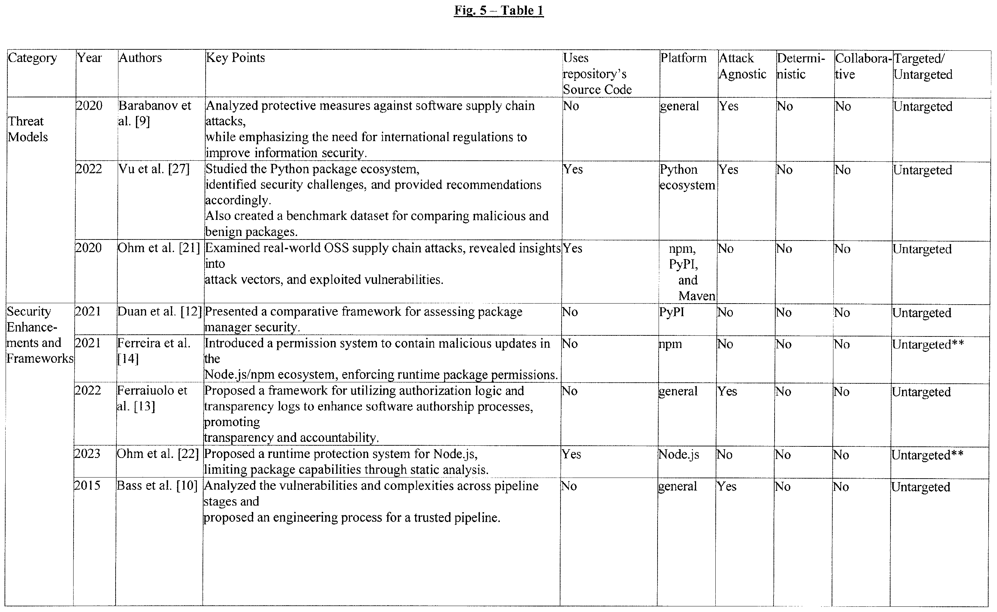

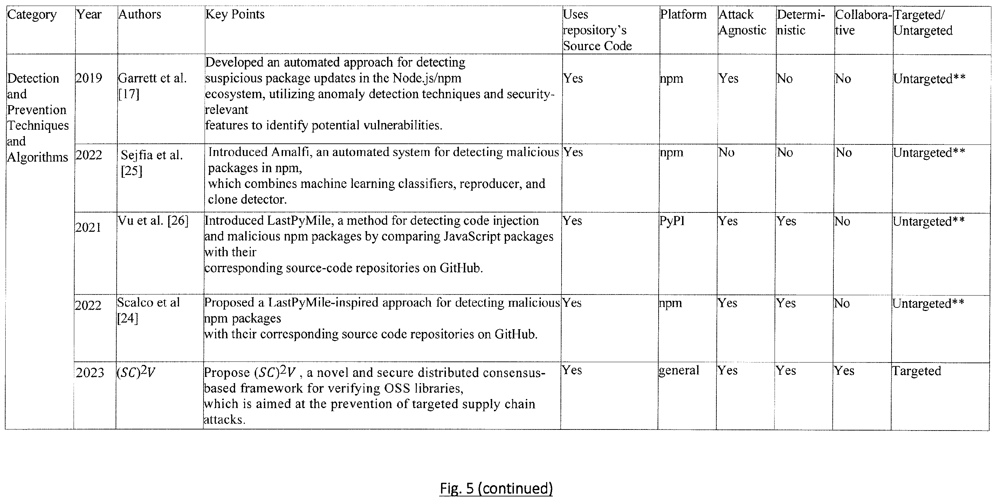

Table 1 (enclosed as Figure 5) shows Existing techniques aimed at improving robustness to OSS supply chain attacks.

*Detection and prevention techniques* often leverage anomaly detection (non-deterministic techniques), metadata analysis, and comparison with source-code repositories to identify suspicious updates or discrepancies. While these detection and prevention techniques are effective for identifying general anomalies and discrepancies, they may struggle against targeted OSS supply chain attacks, which are often crafted to mimic normal behavior or exploit specific vulnerabilities, thereby eluding traditional anomaly detection and metadata analysis. Given the intricate OSS supply chain landscape with frequent simultaneous alerts, over-reliance on non-deterministic methods can lead to numerous false positives, overwhelmed security teams and risking undetected targeted attacks.

While previous studies have made significant contributions in fortifying the software supply chain against a range of cyber threats, in many cases, the proposed methods have limitations when it comes to defending against targeted attacks. These previous studies typically focused on broad threat landscapes, general security enhancements, or anomaly detection, which, although effective for a wide range of threats, they might be too general to counteract diverse and ever-changing tactics employed in targeted supply chain attacks.

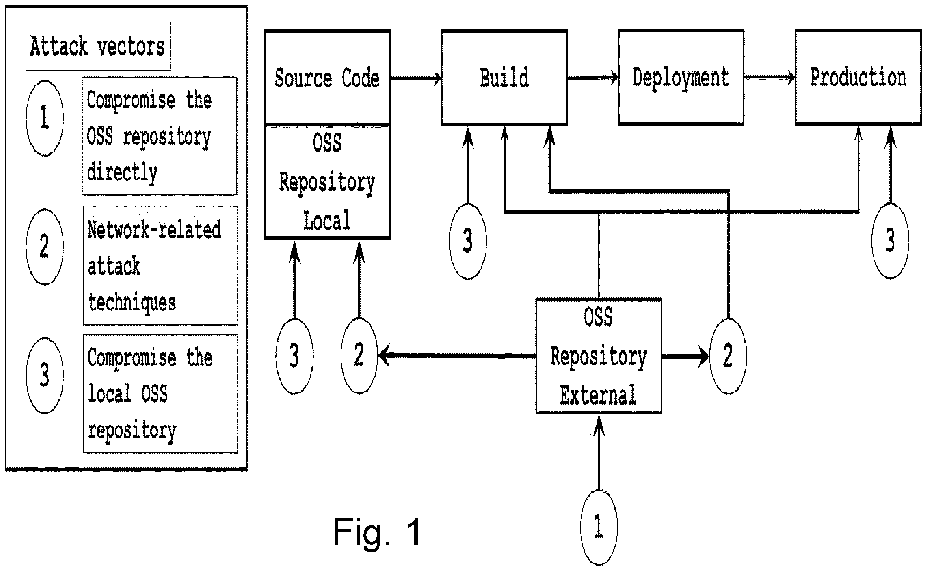

A threat model (encompassing the attacker's goals, whether the attack is targeted or untargeted, and the potential attack vectors employed) for OSS supply chain attacks has been designed, while describing the three attack vectors. Fig. 1 shows the threat model outlining the attack vectors of OSS supply chain attack.

### Compromising the OSS Repository Directly:

In this attack vector, the attacker gains unauthorized access to the OSS repository. This is achieved by injecting malicious code or vulnerabilities directly into the repository. Various means can be used for injection, such as stealing credentials from project maintainers, tampering with open-source developer tools, submitting malicious pull requests, releasing malicious versions of projects to public repositories, or compromising the repository server itself [7]. If the injection remains undetected, the compromised OSS package can be integrated into the target application's code, enabling the attacker to execute their attack plan. This type of attack can be both targeted and untargeted (mostly untargeted).

### Network-Related Attack Techniques:

In this attack vector, the attacker employs deception to trick developers into downloading malicious OSS packages from a repository controlled by the attacker. Examples of such attacks include Man-In-The-Middle (MITM - a cyberattack in which a hacker steals sensitive information by eavesdropping on communications between two online targets such as a user and a web application) attacks [18], DNS poisoning [18], and typo squatting [28]. In this case, the goal of the attacker is to ensure that developers unwittingly download and utilize malicious packages from external resources. This type of attack can be both targeted and untargeted.

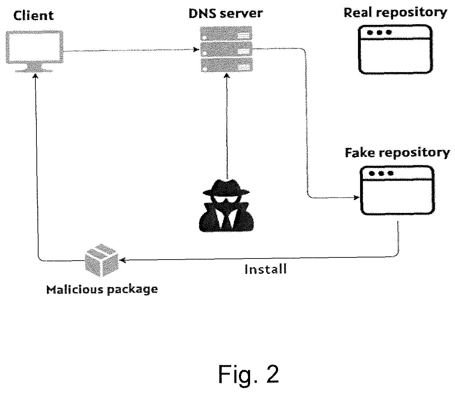

For example, as illustrated in Fig. 2, a DNS poisoning attack can be performed when the client requests to download a package from a repository. The malicious actor tricks the DNS server into diverting traffic to a fake repository. Accordingly, the client installs a malicious package from the fake repository.

### Compromising the Local OSS Repository:

In this attack vector, the attacker gains control of the victim's OSS package's local repository and alters its source code. By successfully manipulating the package within the target's local environment, the attacker introduces malicious code into the package, potentially leading to security breaches or unintended consequences. This type of attack is targeted.

It is, therefore, an object of the present invention to provide a method for performing secure verification of a crowdsource-based open-source code.

It is another object of the present invention to provide a method for performing secure verification of a crowdsource-based open-source code, against attacks where malicious code is embedded within trusted third-party OSS code.

It is another object of the present invention to provide a method for performing secure verification of a crowdsource-based open-source code which uses collective intelligence of users and verifiers to collaboratively identify and thwart targeted attacks.

It is a further object of the present invention to provide a method for performing secure verification of a crowdsource-based open-source code that detects the occurrence of targeted attacks.

It is still another object of the present invention to provide a method for performing secure verification of a crowdsource-based open-source code, which seamlessly integrates into the software production pipeline to offer platform-level security that is robust and adaptable to unique vulnerabilities and security requirements of individual organizations or developers.

Other objects and advantages of the invention will become apparent as the description proceeds.

### Summary of the Invention

A method for secure crowdsource-based verification of an OSS code, comprising:
a) allowing a user (e.g., a developer) to generate requests to verify OSS libraries, the requests containing information required for verification;
b) receiving the requests by a plurality of verifiers, and provide, by the verifiers, a response for each request, the response including validation details based on the verifiers' analysis;
c) receiving by the user, all the responses from verifiers; and
d) applying, by a server having at least one processor and associated memory containing an operating software and being in communication with at least one computerized device of said user, a verification policy that meets predetermined criteria, the verification policy consisting of a set of rules and criteria decision-making process and determining an OSS package's expected content.

The predetermined criteria is based on various features, such as:
- consensus among verifiers' responses; and
- matching hashes.

Unauthorized alterations of the OSS code may be prevented by identifying inconsistencies between the verifiers' consensus and the user's package code.

The proposed method can be based on a threat model of identifying and assessing potential vulnerabilities and risks associated with OSS code supply chains and OSS libraries.

Third-party code components may be delivered for inspection, following invoking the build manager during the application's build process.

Each user may send a request to the request queue, which contains the metadata of the OSS package and includes the package name, version, TTL and the user's certificate.

The request and or the response may be cryptographically signed.

A cyclic or acyclic dependency graph may be used, in which each vertex signifies a specific version of an OSS package, and each directed edge indicates a dependency between two OSS packages.

When a response is detected during the verification process, all of the accumulated responses so far are collected and a set of rules and criteria of the verification policy is applied to determine how to proceed.

An error policy may be applyed to effectively handle errors encountered in the verifiers' responses.

Each user may maintain a dedicated cache that stores verified packages, for quick access and utilization of previously verified packages.

Each verifier may maintain a dedicated cache for retrieving and provide a cached response, upon receiving a similar request.

During the build process, each OSS package may undergo parsing to extract the package's name, version, the repository's URL, and all files within the package.

After the parsing, hashes may be computed for each individual file within a package, to serve as unique identifiers that enable efficient comparison and verification of the package's integrity.

Whenever a package has already been verified and exists in the user's verified package cache, a comparison between the current package and the cached version may be performed and whenever the hashes of the two packages are identical, it signifies that the underlying OSS package can be trusted.

Whenever a consensus is reached among the verifiers' responses, the verified version of the package may be saved in the user's local cache and the user compares the hashes of their package with that of the verified version and if the hashes match, the package is trustworthy.

A framework for secure crowdsource-based verification of an OSS code, comprising:
a) a server having at least one processor and associated memory containing an operating software, the server being in communication with at least one computerized device of a software developer and is adapted to:
   a.1) receive requests, generated by at least one user being a software developer, to verify OSS libraries, the requests containing information required for verification;
   a.2) forward the requests to a plurality of verifiers, and providing, by the verifiers, a response for each request, the response including validation details based on the verifiers' analysis;
   a.3) forward all the responses from verifiers to the user; and
   a.4) apply a verification policy that meets predetermined criteria, the verification policy consisting of a set of rules and criteria decision-making process and determining an OSS package's expected content.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows the threat model outlining the attack vectors of OSS supply chain attack;
- Fig. 2 shows an illustration of an attack scenario with DNS poisoning;
- Fig. 3 shows an example for a dependency graph created for three examined packages: 'express', 'react', 'axios'; and
- Fig. 4 illustrates the framework's architecture, according to an embodiment of the invention.

### Detailed Description of the Invention

The present invention provides a secure crowdsource-based code verification collaborative method and system (framework), for verifying OSS packages in order to identify targeted supply chain attacks prior to deployment to production. The proposed method comprises three main processes:

### User's Requests

In the first process, the user (e.g., a developer) generates requests to verify his libraries.

### Verifiers' Responses

In the second process, the verifiers receive these requests, which contain the information required for the verification process, and provide a response for each request. These responses include the validation, details based on the verifiers' analysis.

### Verification Policy

In the third process, the user receives all the responses from the verifiers and applies an advanced defined verification policy. The verification policy considers various factors, such as consensus among verifiers' responses, matching hashes, and other predetermined criteria.

Different attack scenarios were used to demonstrate the capabilities of the proposed verification method. For each attack scenario, the use of various verification policies has been examined with different numbers of verifiers and users. Nine hundred popular OSS libraries, which were divided among 270 users, were used. This was done to ensure that some users would have identical and unique libraries. In total, about 127,000 files were examined, the results show that the proposed verification method prevented all the attack scenarios in an average time of 26 seconds.

The proposed verification collaborative method and system is scalable, and is based on a distributed and parallel approach, which allows unlimited participant capacity. The system's distributed design contributes to its security and integrity by eliminating single points of failure, preventing bottlenecks and system overload that can be exploited by attackers. The separation of the components within the proposed verification collaborative system reduces the attack surface and makes it harder for unauthorized access or privilege escalation.

The proposed verification collaborative method is attack-agnostic prevention method, which is agnostic to both the method used to inject the attack into the OSS package code and the specific changes made in the code. The prevention mechanism operates by identifying inconsistencies between the verifiers' consensus and the user's package code, thereby effectively preventing any unauthorized alterations. By focusing on the resulting discrepancies (rather than on the specific attack vectors), the proposed method provides a robust and versatile approach for identifying potential security breaches.

The proposed verification collaborative method performs a comprehensive analysis, and explores the various ways in which attacks on the supply chains can be implemented by using OSS libraries and delving into the different attack vectors and strategies malicious actors can employ to compromise the integrity and security of the supply chain. The adoption of a threat model approach allowed identifying and assessing potential vulnerabilities and risks associated with supply chains and OSS libraries.

The proposed framework aims to fill these gaps by adopting a more holistic and adaptive approach. The proposed framework leverages the collective intelligence of users and verifiers to collaboratively identify and thwart targeted attacks, thereby addressing the shortcomings of non-deterministic techniques that often result in high false-positive rates and strain security teams' resources. The proposed framework differs from existing methods since it: (1) uses collaborative crowdsource-based verification to pool expertise and resources, (2) employs a deterministic approach that provides definitive answers about the occurrence of targeted attacks, and (3) seamlessly integrates into the software production pipeline to offer platform-level security that is both robust and adaptable to the unique vulnerabilities and security requirements of individual organizations or developers.

According to the proposed method, the developer (user) works on a code-related project, which includes a third-party code. During the application's build process, the build manager is invoked. Once the build manager is invoked, it transfers the third-party code components to the proposed framework for inspection. Private repositories and packages belonging to application projects are excluded from the verification process.

The following actors are participating in the framework:
User: a participant in the framework who wants to verify OSS packages (e.g., a developer). The user starts the verification process by sending verification requests.
Verifier: a participant in the framework who takes part in the verification process. Each verifier contributes to the overall assessment and validation of OSS packages, utilizing one of the commonly used package managers (e.g., npm or Yarn) to install the packages, as specified in its attributes.

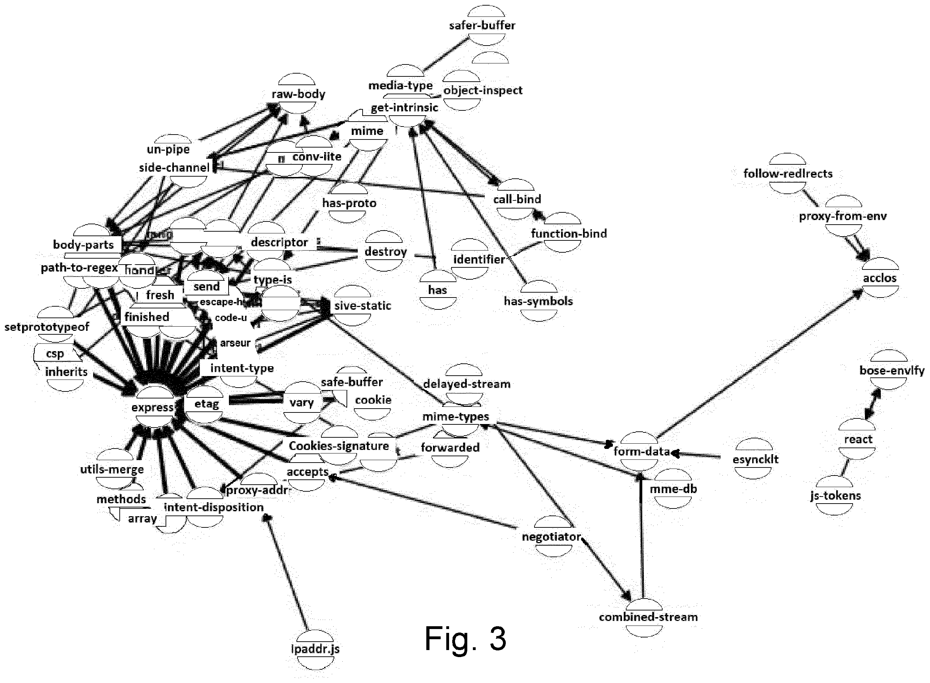

In the proposed framework, the following entities are used:
Request: A request is an entry in a request queue. Each user sends his request to the request queue, which contains the metadata of the package and includes the following attributes: package name, version, TTL (Time To Live is a value that defines the amount of time that a data packet or record should exist on a network, computer or server before it is discarded or revalidated), the user's certificate. Note, the request is cryptographically signed using a signing mechanism.
Verifier's response: A verifier's response is an entry in the verification queue. Each verifier sends their response, which contains the metadata of the package and includes the following attributes: package name, version, files as hashes, TTL, the verifier's certificate, and insights on the package using a dependency graph. The response is cryptographically signed using a signing mechanism.
Dependency graph: A dependency graph is a directed structure used to represent relationships between various entities, such as software packages in a project. In this graph, each vertex (node) signifies a specific version of a package, and each directed edge indicates a dependency between two packages. Such a graph can be cyclic or acyclic and may have weighted edges to denote the frequency of observed dependencies. By visualizing these relationships, one can gain insights into potential vulnerabilities and optimize package management, as shown in Fig. 3.

In one aspect, the proposed framework comprises a server with at least one processor and associated memory that contains an operating software. The server is in communication with at least one computerized device of a software developer, and is adapted to receive requests, generated by at least one user being a software developer, to verify OSS libraries, the requests containing information required for verification; forward the requests to a plurality of verifiers, and providing, by the verifiers, a response for each request, the response including validation details based on the verifiers' analysis; forward all the responses from verifiers to the user; apply a verification policy that meets predetermined criteria, the verification policy consisting of a set of rules and criteria decision-making process and determining an OSS package's expected content.

Request and verification queues: the proposed framework consists of two queues (request and verification), which are used to facilitate asynchronous communication between publishers and consumers. Publishers send messages to the queue, and consumers retrieve and process those messages independently, thereby enabling scalable and efficient message handling in distributed systems [4].

*Request queue* - the role of this queue is to broadcast the requests to the verifiers. The publishers of this queue are the users, and the consumers are the verifiers.

*Verification queue* - the role of this queue is to collect the verifiers' responses. The publishers of this queue are the verifiers, and the consumers are the users.

Verification policy: The verification policy is a set of rules and criteria that guides the framework's decision-making process and allows it to determine a package's expected content. This policy is triggered when a response is detected during the verification process. When triggered, the verification policy collects all of the accumulated responses so far and applies a set of rules and criteria to determine how to proceed. Note that each user has the option to determine its own verification policy. By appying this verification policy (by a server with at least one processor and associated memory that contains an operating software and is in communication with the computerized device of the user), the proposed framework ensures that a systematic and structured approach is used to assess the integrity and completeness of packages based on predetermined criteria, which improves the reliability and security of the verification process.

Consensus: Consensus is based on each user's policy. A user collects responses from verifiers and independently decides on the consensus threshold (the value for which an item should be selected for inclusion) used to match hashes (one-way mathematical functions that turn data into a string of nondescript text that cannot be reversed or decoded), which are required for successful verification.

Error policy: The error policy provides guidelines on how to effectively handle errors, ensuring that appropriate actions are taken to resolve them. The errors are inserted into an error queue. The error policy is used to address any errors encountered in the verifiers' responses; examples of errors that may occur include installation errors and cases where the TTL has expired. The error policy is defined by the user, allowing for customization based on specific requirements.

User's verified package cache: Each user maintains a dedicated cache that stores verified packages. By maintaining this cache, users can quickly access and utilize previously verified packages, thereby saving time and resources.

Verifier's cache: Each verifier maintains a dedicated cache. When a verifier installs a package, the corresponding response is stored in its cache. This way, upon receiving a similar request, the verifier can retrieve and provide the cached response, minimizing duplicate verification processes.

User's requests: During the build process, each OSS package undergoes parsing to extract important information. This includes extracting the package's name, version, the repository's URL, and all files within the package. After the parsing, hashes are computed for each individual file within a package. These hashes serve as unique identifiers, enabling efficient comparison and verification of the package's integrity.

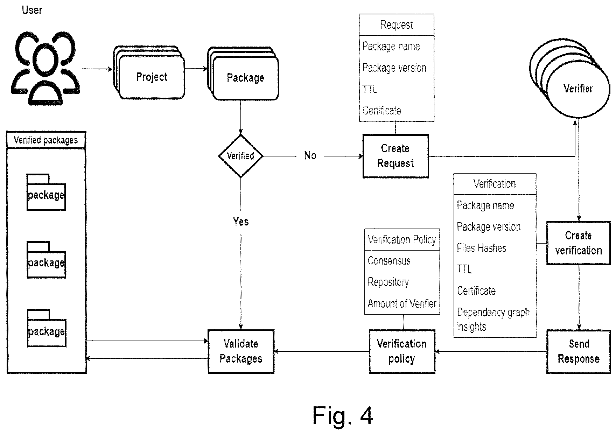

Then it is determined whether a package has already been verified and exists in the user's verified package cache (as illustrated in Fig. 4). If the package is found in the locally verified packages cache, a comparison between the current package and the cached version is performed. If the hashes of the two packages are identical, it signifies that the underlying OSS package can be trusted, indicating that it has not been victim to a targeted supply chain attack. If the given package is not found in the local cache, it indicates that the package has not been verified yet (as depicted in Fig. 4). To initiate the verification process, the user creates a new request that includes the details of the package and publishes this request on the request queue, a step that is repeated for each package the user wants to verify (as can be seen in Fig. 4). At this point, two key actions occur:
(1) User Waits for Callback - After publishing the request, the user waits for a callback or response from the verifiers. This callback will contain the verification results or any relevant information related to the requested package.
(2) Verifiers Consume Requests - Simultaneously, the verifiers actively consume the requests in the request queue, retrieving and processing the incoming requests, and initiating the verification for the specified packages.

Verifiers' Responses: During the verification process, each verifier consumes a request from the request queue. Framework verifiers use caches since it might not be practical to validate all the dependencies of the project. The verifier begins by checking if the requested package already exists in their cache. If the package is found in the cache, the verifier updates the weights in the dependency graph and publishes the response on the verification queue. Both the verifier's cache and the user's verified package cache have TTL values associated with them. The TTL value determines the period of time that the cache entries remain valid. Once the TTL expires, the cache entries are automatically deleted, thereby ensuring that the cached information remains up-to-date and aligned with the latest verification results. However, if the requested package is not found in the cache, the verifier generates a download task using the given OSS package's name and version. Note that the download is sourced from the registry defined in the verifier's attributes (as elaborated in the verification policy using consensus mechanism process). The verifier then hashes the package files, incorporating these hashes into the response. Then, the verifier analyzes the packages to determine dependencies. These dependencies are then visualized in the dependency graph. Where each package is represented as a vertex, each dependency as an edge and the edge's weights are updated accordingly where each request increases the weight. Then, the verifier extracts insights from the updated dependency graph and includes it in their responses. The created verification response is published on the verification queue, enabling further processing and evaluation by other participants in the framework i.e., users.

In the event of an error during the verification process, such as the inability of a verifier to download a package or the expiration of the TTL, the error is recorded and inserted in a separate queue called the error queue. In order to effectively handle such errors, the user also consumes from this error queue. When encountering an error, the user checks the reason behind it and takes appropriate action. If the error was caused by a verifier's inability to download the package, the user waits for responses from other verifiers who may have successfully completed the download and verification process. This allows the user to gather multiple verification responses before making a final decision. Alternatively, if the error was due to the expiration of the TTL, the user can resend the request, ensuring that the verification process restarts with a fresh TTL. After a user receives a response from the verifier, the user initiates the verification policy (as shown in Fig. 4).

Once a consensus is reached among the verifiers' responses, the verified version of the package is saved in the local cache of the user's computerized device. The user compares the hashes of their package with that of the verified version. If the hashes match, the package is trustworthy. However, if there is a discrepancy between the two, the user will opt for the verified package over their own. This ensures that the user has access to a trusted and validated version of the package for future use, as can be seen in Fig. 4.

By applying the verification policy and reaching a consensus, the proposed framework enables users to make informed decisions regarding the integrity and reliability of packages, thereby contributing to a more secure and dependable software ecosystem (the interaction of a set of actors on top of a common technological platform that results in a number of software solutions or services).

Verification Policy using Consensus Mechanism:
Generally, a consensus mechanism is any method used to achieve agreement, trust, and security across a decentralized computer network. Each user needs to define a verification policy, which is used to determine whether a consensus has been reached among the verifiers. To ensure OSS package safety, there should be a large number of similar verification responses. This indicates that more verifiers have obtained the same OSS package from various OSS registries. The more verifiers involved in the verification process, the greater the chances that they obtained the package from different registries, which (if a consensus is reached) increases the chances that the package is benign. The user can require that the verifiers' responses originate from a variety of OSS registries. Similarly, the policy can enforce a requirement demanding (or regarding) diversity of origin among the verifiers, i.e., ownership diversity, geographical diversity, and environmental diversity.

Each new verifier adds trust and increases risk. However, after many verifiers are involved, each additional verifier does not significantly increase trust, as there are enough verifiers from enough sources. The use of the consensus mechanism in the proposed framework enables the prevention of targeted attacks against one project or an entire organization.

### Mitigated Threats

Existing security practices are insufficient for the threat model (Fig. 1) described, since attackers are familiar with the existing mitigation methods and therefore can bypass them. For example, when considering using code signing, if attackers access private keys, they can sign malicious packages, making them appear legitimate based on signature verification. In addition, while cryptographic hashes are commonly used to verify the integrity of packages, there are scenarios where hashes might not provide complete protection, for instance: (1) Collision attacks: attackers could find two different inputs that produce the same hash value, allowing them to substitute a malicious package for a legitimate one [19]. (2) Preimage attacks: attackers might craft a malicious package that matches the hash value of a legitimate package, evading hash-based detection [20]. Accordingly, the different attack vectors presented in Fig. 1 are analyzed and how they can be mitigated by the proposed framework. According to the analysis presented below, the best practice is to combine the proposed framework with detection or prevention methods (such as those listed in Table 1) to prevent targeted and untargeted OSS supply chain attacks.

### Compromising the OSS Repository Directly:

*Untargeted attack* the attacker injects malicious code into the main repository of the package. The verifiers may mistakenly reach a consensus regarding the malicious software package, as expected since the proposed framework is designed to detect targeted attacks.

*Targeted attack* - The attacker specifically targets the victim, causing them to download a different version of the content of the package when requested. When the victim submits its package for verification using the proposed framework, the verifiers will download the benign version, resulting in a consensus with respect to the true content and the successful prevention of the attack.

### Network-related Attack Techniques:

*Untargeted attack -* The malicious package, which is created by an attacker using typo squatting, dependency confusion, etc., is identical for all users who download it. In such cases, the malicious package is publicly available, and the verifiers will download the same malicious package as other users, i.e., the verifiers may mistakenly reach a consensus regarding the malicious package.

*Targeted attack -* The malicious package is tailored specifically for the victim and created by an attacker by performing a MITM attack, DNS poisoning, or directly tampering with legitimate URLs on the client's end. The proposed framework is capable of successfully preventing such attacks since the majority of the verifiers will download the benign package. Therefore, a consensus among the verifiers will be reached based on the legitimate version.

### Compromising the Local OSS Repository:

*Untargeted attack* - Since the attack targets the victim's local OSS repository, there is no untargeted version of this attack.

*Targeted attack -* The attacker successfully modifies a package in the target's local environment. All of the verifiers will download the benign package, resulting in consensus among the verifiers and successfully prevent the attack. Since the proposed framework uses verifiers outside the organization and in different locations (e.g., different countries) and environments (e.g., different operating systems), when the attack targets an organization, the proposed framework is capable of preventing such attacks. Table 2 shows Dependency graph results.

**Table 2**

| Node | In-degree | Betweenness | Closeness |
|---|---|---|---|
| express | 31 | 0 | 0.089 |
| @jest/core | 28 | 0.0022 | 0.229 |
| @jest/reporters | 24 | 0.0003 | 0.132 |
| webpack | 24 | 0 | 0.095 |
| jest-config | 22 | 0.0027 | 0.207 |
| jest-runtime | 22 | 0.0012 | 0.168 |
| jest-runner | 21 | 0.0006 | 0.171 |
| jest-snapshot | 20 | 0.0052 | 0.131 |
| jest-circus | 20 | 0.00057 | 0.158 |
| @jest/transform | 15 | 0.0042 | 0.109 |

To demonstrate the proposed framework framework's feasibility, a series of experiments that cover three key aspects were performed: (1) Test environment, (2) Implementation, and (3) Attack scenarios. The experiments were conducted in a controlled environment, e.g., without malicious participants, while employing a set of test cases designed to simulate various attack scenarios. All experiments were performed on the 2th Gen Intel Core operating system. The code used in the experiments was written using Python 3.11.0, pika 1.3.1, numpy 1.24.2, pandas 1.5.3, rsa 4.9, and certify 2022.12.7.

### Test environment

To demonstrate the proposed framework framework's capabilities, 270 JavaScript projects were developed, each of which includes a different number of OSS benign and compromised packages. Each project represents a user aiming to verify their OSS packages.

RabbitMQ (a chat application that enables real-time communication between users in chat applications. It can handle the exchange of messages between users, allowing for instant messaging and group chat functionality) was used as the message broker for the proposed framework, and a fanout exchange was used to broadcasts messages to all connected queues, i.e., any messages published to the exchange are replicated and delivered to every queue that is bound to it. The use of a fanout exchange ensures that all (*SC*)²*V* verifiers receive the relevant messages simultaneously. This parallel distribution of messages allows for efficient and simultaneous processing by multiple verifiers, accelerating the verification of OSS packages.

Node Package Manager (NPM) and yarn (NPM and yarn are both package managers for JavaScript projects. They allow developers to install, manage, and update the dependencies of their projects) were utilized as package managers for package installation for the verifiers, since they are widely recognized and used package managers in the JavaScript ecosystem [11].

For the creation of the dependency graph the python package networkx [6] is used. To detect central vertexes, three different centrality measures were applied [16]:
*(1) Degree:* which defines the importance of a vertex based on the number of edges connected to the given vertex.
*(2) Closeness:* which identifies a vertex's importance based on how close it is to all the other vertexes in the graph. This value is calculated according to the number of edges of the shortest path between the vertexes.
*(3) Betweenness:* which defines the importance of a vertex based on the number of times it occurs in the shortest paths between other vertexes. The betweenness centrality measures the percentage of the shortest path within a network and where a particular vertex lies in it.

A series of test cases were designed to simulate different attack scenarios (locally in the test environment): *(1) Code Injection:* malicious code has been introduced into pre-existing files in the targeted package. *(2) Addition of Malicious Files:* new malicious files have been added to the local repository of the package. *(3) Deletion of Valuable Code:* attacks were performed by deliberately removing valuable components from the package's source code, including complete files, to impair the package's functionality or introduce critical errors, ultimately affecting its reliability and performance.

The following attack scenarios were examined:
Several users have a different compromised package in their project.

Different projects are selected and deliberately targeted one unique package within each project. Compromising these individual packages, allows assessing the framework's performance in preventing attacks across multiple projects and its ability to handle diverse instances of compromised packages.

Several users have the same package, however in each case the package was compromised using a different type of attack: a package that was widely used in different projects was selected and different attack techniques were applied to compromise the package in each user's project. Aimed to assess the proposed framework framework's ability to prevent and respond to various attack vectors on the same package.

One user was selected and intentionally included a compromised package in their project. One user has a compromised package in their project, and the other users' projects do not include that package. Aimed to assess the framework's ability to identify the compromised package in the user's project, even when it differed from the packages used by other users.

Cold start in which a new user joins the framework: a new user who had not previously been part of the proposed framework has been introduced. Aimed to assess the framework's ability to effectively onboard and integrate new users into the existing system. When a new user joins the framework, they bring their own set of projects and packages that required verification.

Cold start in which a new user with a compromised package joins the framework: a new user who had not previously been part of the proposed framework has been introduced. The new user has a package that has already been compromised. Aimed to evaluate the framework's capability to prevent and mitigate security risks associated with a compromised package introduced unknowingly by the user.

Error case in which the verifier cannot install a requested package: An error has been introduced, such that the verifier encounters an error when trying to install the requested package. The framework is then responsible for preventing the error, logging the relevant details, and providing appropriate feedback to the user. Aimed at evaluating the framework's ability to handle and respond to errors during the package installation process. These errors could potentially impact the verifier's ability to perform a thorough analysis and verifiy the package.

Error in which the Time-To-Live (TTL) value of the request has expired: a low TTL value for the request has been created, ensuring that the time had expired before the verification process could be completed. Aimed at evaluating the framework's ability to handle and respond to requests that exceed their allotted timeframe. This scenario could occur due to prolonged processing times, network congestion, or other factors. In the proposed framework, each request has a designated TTL value, which determines the maximum time allowed to process the request.

Several verifiers are compromised: the cache of several of the verifiers has been compromised by changing the hashes computed for the responses. Several verifiers are compromised, potentially as a result of various attack vectors or security vulnerabilities. Aimed at evaluating the framework's ability to handle compromised verifiers and maintain the integrity of the verification process. These compromised verifiers may provide incorrect or malicious verification results, undermining the overall reliability and trustworthiness of the framework. The proposed framework employs a consensus mechanism which enables the remaining uncompromised verifiers to come to an agreement on the verification results and ensuring that the compromised verifiers' influence is minimized and that the overall verification process remains reliable and secure.

Tables 3-6 present the results for each of the examined attack scenarios. Each column in the table represents a different test configuration: (1) Users - the number of users requesting the verification of a package by the framework, (2) Total packages - the total number of packages examined during the verification process, (3) Cache - indicating whether the proposed framework uses the cache of the user and verifier, (4) Verifiers - the number of verifiers participating in the verification process, (5) Consensus - the number of verifier responses required to apply the user's policy, and (6) Avg time - the average time it took for the proposed framework to successfully perform the verification process.

The results presented in the tables demonstrate the proposed framework 's effectiveness, even when examined on diverse attack scenarios. As can be seen, the number of verifiers varied from 5-20, allowing for a diversity of perspectives and assessments. The consensus ranged from 55-100%, indicating a high level of agreement among the verifiers. Nine hundred popular OSS libraries, which were divided among 270 users, were used in the demonstration in order to ensure that there would be users with identical libraries and users with unique libraries. In total, around 127,000 files were examined in the examination of the eight attack scenarios.

The impact of verifiers' cache retention on the performance of the proposed framework has been investigated. Two scenarios were examined: (1) a scenario in which the verifiers' cache was deleted after each scenario, and (2) a scenario in which the cache was not deleted. In the experiments in which the verifiers' cache was deleted, it was observed that the proposed framework consistently had an average detection time of 43 seconds. As expected, without cache deletion, the average time was 13 seconds, which emphasizes the strength of using cache in the process. However, there is a trade-off between performance and security, as it is recommended to delete the cache to improve security.

Table 2 presents the results of a dependency graph for one verifier using ten of the most popular (most downloaded) npm packages and their dependencies for ten users in the proposed framework. Note that although this result represents a demonstration for only one verifier, a dependency graph is created by each verifier in the proposed framework. Each row represents a package, where the first column is the vertex (package name), the second is the in-degree value, the third is the betweenness value and the last is the closeness value. Due to space limitations, the table presents only ten rows from a total of 372 rows. The rows with the highest values were presented for easy analysis. The in-degree represents the number of direct dependencies of each examined package. The 'express' package has the highest number of direct dependencies, 31. The highest closeness value represents packages that can be reached by using other packages even though they are not a direct dependency of the examined package. For example, the @jest/core package is reachable from other packages, as evidenced by its closeness value of 0.2291. The betweenness represents packages that through them other packages can be reached. For example, the 'jest-snapshot' package acts as a bridge in the network with a betweenness value of 0.0052. Note that these four packages -'@jest/core', 'jest-config', 'jest-runtime', and 'jest-snapshot'- are in the top ten across all three measures. This indicates that they are more vulnerable to being chosen as a third party to create a supply chain attack. These findings underscore the central roles of certain packages in the dependency network, emphasizing their importance in the npm ecosystem. In addition, note that in the example for the dependency graph which was created only for the three examined packages ('express', 'react', 'axios') 3, the 'express' package is also the most centralized one which indicates it's high risk.

Analysis of the potential security threats and vulnerabilities that may affect the proposed framework has been performed, and recommendations were provided for mitigating them. In addition, functionalities that enhance the security of the proposed framework were presented.

Denial-of-service (DoS): DoS is a type of attack in which an attacker aims to prevent legitimate users from accessing a service or resource. In an attempt to compromise the proposed framework , the attacker would submit a large number of requests for verification in an attempt to overwhelm the system, causing it to slow down or even become unavailable to legitimate users. To mitigate such attacks the proposed framework employs the following strategies: (1) limiting the number of requests that can be sent for verification at any given time, and (2) dividing the verifiers into separates queues.

Man-in-the-middle (MITM): In this type of attack an attacker attempts to intercept and control the communication of the request queue and verification responses, potentially compromising the integrity and authenticity of the data being exchanged. In this case, the attacker can pose as a legitimate user or verifier, altering the messages without detection. To mitigate these attacks the proposed framework employs a robust cryptographic signing mechanism for each request queue and verification response. Therefore, the integrity and authenticity of the exchanged messages is ensured, even if an attacker gains control of the communication channel.

Time-To-Live (TTL) and timestamp functionalities: (1) Setting a short TTL for messages reduces the window of vulnerability if the message has been intercepted or compromised and can prevent users from waiting for an excessive amount of time i.e. prevents users from getting stuck during the build. (2) When a message exceeds its TTL and is automatically removed from the queue, it can serve as an indicator of unauthorized access or manipulation. (3) A scenario in which a malicious actor floods the queue with a large number of messages, each having a long TTL, could lead to overconsumption of system resources (resource exhaustion attacks). By setting reasonable TTL values, it is ensured that messages eventually expire, freeing up resources and preventing the queue from being overwhelmed.

**Table 3**

| **Users** | **Total Packages** | **Cache** | **Verifiers** | **Consensus** | **A1 Avg Time** | **A2 Avg Time** | **A3 Avg Time** | **A4 Avg Time** |
|---|---|---|---|---|---|---|---|---|
| 10 | 320 | No | 5 | 3 | 6 | 42 | 35 | 40 |
| | | | | 5 | 5 | 11 | 14 | 12 |
| | | | 10 | 10 | 8 | 32 | 25 | 17 |
| | | | | 6 | 7 | 19 | 20 | 15 |
| | | | 20 | 11 | 11 | 26 | 22 | 20 |
| | | | | 15 | 18 | 37 | 42 | 33 |
| | 103 | Yes | 5 | 3 | 4 | 18 | 18 | 16 |
| | | | | 5 | 3 | 12 | 15 | 13 |
| | | | 10 | 10 | 4 | 13 | 17 | 13 |
| | | | | 6 | 3 | 14 | 16 | 16 |
| | | | 20 | 11 | 6 | 11 | 10 | 11 |
| | | | | 15 | 8 | 9 | 7 | 8 |
| | | | | 20 | 7 | 8 | 11 | 13 |
| 20 | 264 | Yes | 5 | 3 | 16 | 7 | 9 | 9 |
| | | | | 5 | 8 | 8 | 7 | 10 |
| | | | 10 | 10 | 9 | 11 | 13 | 11 |
| | | | | 6 | 8 | 9 | 8 | 10 |
| | | | 20 | 11 | 9 | 9 | 8 | 9 |
| | | | | 15 | 10 | 13 | 13 | 11 |
| | | | | 20 | 9 | 13 | 15 | 13 |

Table 3 shows four attack scenarios: (1) Users without compromised packages; (2) Each user possessing a distinct compromised package; (3) A singular user with a unique compromised package; and (4) Cold start scenario where a new entrant with a compromised package joins the framework.

**Table 4**

| **Users** | **Total Packages** | **Cache** | **Verifiers** | **Consensus** | **Avg Time** |
|---|---|---|---|---|---|
| 10 | 477 | No | 5 | 3 | 17 |
| | | | | 5 | 20 |
| | | | 10 | 10 | 85 |
| | | | | 6 | 82 |
| | | | 20 | 15 | 88 |
| | | | | 20 | 57 |
| | | | | 11 | 117 |
| | 491 | Yes | 5 | 3 | 12 |
| | | | | 5 | 12 |
| | | | 10 | 10 | 21 |
| | | | | 6 | 18 |
| | | | 20 | 11 | 11 |
| | | | | 15 | 15 |
| | | | | 20 | 19 |

Table 4 shows an attack scenario where several users have the same package, however in each case, the package was compromised using a different type of attack.

**Table 5**

| **Users** | **Total Packages** | **Cache** | **Verifiers** | **Consensus** | **Avg Time** |
|---|---|---|---|---|---|
| 10 | 432 | No | 5 | 3 | 13 |
| | | | | 5 | 13 |
| | | | 10 | 10 | 70 |
| | | | | 6 | 23 |
| | | | 20 | 11 | 105 |
| | | | | 15 | 103 |
| | | | | 20 | 95 |
| | 444 | Yes | 5 | 3 | 6 |
| | | | | 5 | 8 |
| | | | 10 | 10 | 9 |
| | | | | 6 | 8 |
| | | | 20 | 11 | 8 |
| | | | | 15 | 8 |
| | | | | 20 | 10 |

Table 5 shows an attack scenario with a cold start in which a new user joins the framework.

**Table 6**

| **Users** | **Total Packages** | **Cache** | **Verifiers** | **Consensus** | **Avg Time** |
|---|---|---|---|---|---|
| 10 | 440 | No | 5 | 3 | 12 |
| | | | | 5 | 13 |
| | | | 10 | 10 | 52 |
| | | | | 6 | 48 |
| | | | 20 | 11 | 50 |
| | | | | 15 | 53 |
| | | | | 20 | 56 |
| | | Yes | 5 | 3 | 10 |
| | | | | 5 | 11 |
| | | | 10 | 10 | 9 |
| | | | | 6 | 10 |
| | | | 20 | 11 | 10 |
| | | | | 15 | 10 |
| | | | | 20 | 10 |

Table 6 shows an attack scenario where several verifiers are compromised; less than the consensus threshold.

Cache and delete cache TTL: The use of cache and restrictions on its deletion improves response times and availability. By reducing the time it takes to serve a response, the window of vulnerability for potential attackers is minimized. During periods of high traffic, caching can ensure that critical information or services remain accessible. Once the TTL period expires, the cache system automatically deletes the corresponding cache entries enforcing a time-bound validity period for the cached information and ensures that the cache remains aligned with the latest verification results.

Compromised verifiers: In scenarios where some verifiers are compromised or exhibit malicious behavior, the proposed framework verification policy ensures that their influence is mitigated, since a majority of verifiers reach a common consensus. By relying on the majority's decision, the proposed framework minimizes the impact of compromised verifiers and prevents them from jeopardizing the integrity of the overall system. Even if a subset of verifiers is compromised, the collective decision-making power of the majority outweighs the compromised subset's influence. However, in a case in which a majority of the verifiers are compromised (which is less likely to occur), the proposed framework can use existing consensus protocols (such as blockchain).

Deterministic approach: the proposed framework 's deterministic operation ensures unambiguous, consistent results. This enhances security by:
(1) Accurately identifying and flagging potential attacks. (2) Reducing the risk of false positives or negatives, thus enhancing the reliability of the verification process. (3) Ensuring that when a security alert is triggered, it is based on verification and the use of the consensus mechanism, which increases trust in the overall security infrastructure. (4) Enabling traceability and accountability, since when an attack is detected with 100% accuracy, it provides a clear and undeniable indication of the presence of a threat.

Verifiers' motivation or incentivization: The number of verifiers provided by each organization that participates in the proposed framework varies based on the organization's size, resources, or strategic interests. While financial incentives could also play an important role in the proposed framework , an additional consideration arises when verifiers are rewarded for their efforts. (e.g., determining how much to pay for each verification) is introduced when verifiers are rewarded for their efforts.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

### REFERENCES

[1] [n. d.]. *8th Annual State of the Software Supply Chain.* https://www.sonatype. com/state-of-the-software-supply-chain/introduction
[2] [n. d.]. Addressing Cybersecurity Challenges in Open Source Software. ([n. d.]).
[3] [n. d.]. *The Octopus Scanner Malware: Attacking the open source supply chain.* https://securitylab.github.com/research/octopus-scanner-malware-open- source-supply-chain/
[4] [n. d.]. *Rabbit mq tutorial.* https://www.rabbitmq.com/tutorials/tutorial-two-python.html
[5] [n. d.]. Understanding the Risks of Open-Source Software. https: J/www.contrastsecurity.com/hubfs/Understanding-the-Risks WhitePaper_ 042020_Final.pdf?hsLang=en
[6] 2014. Introduction 2014; NetworkX 3.1 documentation - networkx.org. https: //networkx.org/documentation/stable/reference/introduction.html.
[7] 2021. 2021 State of the Software Supply Chain: Open Source Security and Dependency Management Take Center Stage. https://www.sonatype.com/resources/state-of- the-software-supply-chain-2021
[8] 2023. https://thehackernews.com/2023/08/malicious-npm-packages-aim-to-target.html
[9] Alexander Barabanov, Alexey Markov, and Valentin Tsirlov. 2020. On systematics of the information security of software supply chains. In Proceedings of the Computational Methods in Systems and Software. Springer, 115-129.
[10] Len Bass, Ralph Holz, Paul Rimba, An Binh Tran, and Liming Zhu. 2015. Securing a deployment pipeline. In 2015 IEEE/ACM 3rd International Workshop on Release Engineering. IEEE, 4-7.
[11] Ruian Duan, Omar Alrawi, Ranjita Pai Kasturi, Ryan Elder, Brendan Saltaformaggio, and Wenke Lee. 2020. Towards measuring supply chain attacks on package managers for interpreted languages. arXiv preprint arXiv:2002.01139 (2020).
[12] Ruian Duan, Omar Alrawi, Ranjita Pai Kasturi, Ryan Elder, Brendan Saltaformaggio, and Wenke Lee. 2020. Measuring and preventing supply chain attacks on package managers. arXiv e-prints (2020), arXiv-2002.
[13] Andrew Ferraiuolo, Razieh Behjati, Tiziano Santoro, and Ben Laurie. 2022. Policy Transparency: Authorization Logic Meets General Transparency to Prove Software Supply Chain Integrity. (2022).
[14] Gabriel Ferreira, Limin Jia, Joshua Sunshine, and Christian Kästner. 2021. Containing malicious package updates in npm with a lightweight permission system. In 2021 IEEE/ACM 43rd International Conference on Software Engineering (ICSE). IEEE, 1334-1346.
[15] European Union Agency for Cybersecurity (Ed.). 2021. ENISA THREAT LANDSCAPE FOR SUPPLY CHAIN ATTACKS. ENISA.
[16] Linton C Freeman. 1978. Centrality in social networks conceptual clarification.
[17] Social networks 1, 3 (1978), 215-239.
[18] Kalil Garrett, Gabriel Ferreira, Limin Jia, Joshua Sunshine, and Christian Kästner. 2019. Detecting suspicious package updates. In 2019 IEEE/ACM 41st International Conference on Software Engineering: New Ideas and Emerging Results (ICSE-NIER). IEEE, 13-16.
[19] Piergiorgio Ladisa, Henrik Plate, Matias Martinez, and Olivier Barais. 2022. Taxonomy of Attacks on Open-Source Software Supply Chains. (4 2022). http://arxiv.org/abs/2204.04008
[20] Josh Lake. 2022. What is a collision attack? https://www.comparitech.com/blog/ information-security/what-is-a-collision-attack/
[21] Josh Lake. 2022. What is a preimage attack and are they dangerous? https:
[22] /www.comparitech.com/blog/information-security/what-is-preimage-attack/
[23] Marc Ohm, Henrik Plate, Arnold Sykosch, and Michael Meier. 2020. Backstabber's knife collection: A review of open source software supply chain attacks. In International Conference on Detection of Intrusions and Malware, and Vulnerability Assessment. Springer, 23-43.
[24] Marc Ohm, Timo Pohl, and Felix Boes. 2023. You Can Run But You Can't Hide: Runtime Protection Against Malicious Package Updates For Node. js. arXiv preprint arXiv:2305.19760 (2023).
[25] Eric Raymond. 1999. The cathedral and the bazaar. Knowledge, Technology & Policy 12, 3 (1999), 23-49.
[26] Simone Scalco, Ranindya Paramitha, Duc-Ly Vu, and Fabio Massacci. 2022. On the feasibility of detecting injections in malicious npm packages. In Proceedings of the 17th International Conference on Availability, Reliability and Security. 1-8.
[27] Adriana Sejfia and Max Schäfer. 2022. Practical automated detection of malicious npm packages. In Proceedings of the 44th International Conference on Software Engineering. 1681-1692.
[28] Duc-Ly Vu, Fabio Massacci, Ivan Pashchenko, Henrik Plate, and Antonino Sabetta. 2021. Lastpymile: identifying the discrepancy between sources and packages. In Proceedings of the 29th ACM Joint Meeting on European Software Engineering Conference and Symposium on the Foundations of Software Engineering. 780-792.
[29] Duc-Ly Vu, Zachary Newman, and John Speed Meyers. 2022. A Benchmark Comparison of Python Malware Detection Approaches. arXiv preprint arXiv:2209.13288 (2022).
[30] Duc-Ly Vu, Ivan Pashchenko, Fabio Massacci, Henrik Plate, and Antonino Sabetta. 2020. Typosquatting and combosquatting attacks on the python ecosystem. In 2020 IEEE European Symposium on Security and Privacy Workshops (EuroS&PW). IEEE, 509-514.

## Claims

1. A method for secure crowdsource-based verification of an OSS code, comprising:
a) allowing a user being a software developer to generate requests to verify OSS libraries, said requests containing information required for verification;
b) receiving said requests by a plurality of verifiers, and providing, by said verifiers, a response for each request, said response including validation details based on the verifiers' analysis;
c) receiving by said user, all the responses from verifiers; and
d) applying, by a server having at least one processor and associated memory containing an operating software and being in communication with at least one computerized device of said user, a verification policy that meets predetermined criteria, said verification policy consisting of a set of rules and criteria decision-making process and determining an OSS package's expected content.

2. A method according to claim 1, wherein the predetermined criteria are selected from the group of:
- consensus among verifiers' responses;
- matching hashes.

3. A method according to claim 1, further comprising preventing unauthorized alterations of the OSS code by identifying inconsistencies between the verifiers' consensus and the user's package code.

4. A method according to claim 1, wherein third-party code components are delivered for inspection, following invoking the build manager during the application's build process.

5. A method according to claim 1, wherein each user sends a request to the request queue, which contains the metadata of the OSS package and includes the package name, version, TTL and the user's certificate.

6. A method according to claim 1, wherein the request and or the response is cryptographically signed.

7. A method according to claim 1, further using a cyclic or acyclic dependency graph, in which each vertex signifies a specific version of an OSS package, and each directed edge indicates a dependency between two OSS packages.

8. A method according to claim 1, when a response is detected during the verification process all of the accumulated responses so far are collected and a set of rules and criteria of verification policy is applied to determine how to proceed.

9. A method according to claim 1, further comprising applying an error policy to effectively handle errors encountered in the verifiers' responses.

10. A method according to claim 1, wherein each user maintains a dedicated cache that stores verified packages, for quick access and utilization of previously verified packages

11. A method according to claim 1, wherein each verifier maintains a dedicated cache for retrieving and provide a cached response, upon receiving a similar request.

12. A method according to claim 1, wherein during the build process, each OSS package undergoes parsing to extract the package's name, version, the repository's URL, and all files within the package.

13. A method according to claim 12, wherein after the parsing, hashes are computed for each individual file within a package, to serve as unique identifiers that enable efficient comparison and verification of the package's integrity.

14. A method according to claim 1, wherein whenever a package has already been verified and exists in the user's verified package cache, a comparison between the current package and the cached version is performed and whenever the hashes of the two packages are identical, signifying that the underlying OSS package can be trusted.

15. A method according to claim 1, wherein whenever a consensus is reached among the verifiers' responses, the verified version of the package is saved in the user's local cache of the at least one computerized device, and the user compares the hashes of their package with that of the verified version and if the hashes match, the package is trustworthy.

16. A framework for secure crowdsource-based verification of an OSS code, comprising:
a) a server having at least one processor and associated memory containing an operating software, said server being in communication with at least one computerized device of a software developer and is adapted to:
b) receive requests, generated by at least one user being a software developer, to verify OSS libraries, said requests containing information required for verification;
c) forward said requests to a plurality of verifiers, and providing, by said verifiers, a response for each request, said response including validation details based on the verifiers' analysis;
d) forward all the responses from verifiers to said user; and
e) apply a verification policy that meets predetermined criteria, said verification policy consisting of a set of rules and criteria decision-making process and determining an OSS package's expected content.
